(19) Europäisches Patentamt
European Patent Office
Office européen des brevets

(11) EP 1 208 182 B1

(12) # EUROPÄISCHE PATENTSCHRIFT

(45) Veröffentlichungstag und Bekanntmachung des Hinweises auf die Patenterteilung:
**25.02.2004 Patentblatt 2004/09**

(21) Anmeldenummer: **00951437.3**

(22) Anmeldetag: **24.07.2000**

(51) Int Cl.[7]: **C09K 19/02**, G02F 1/141

(86) Internationale Anmeldenummer:
**PCT/EP2000/007075**

(87) Internationale Veröffentlichungsnummer:
**WO 2001/007535 (01.02.2001 Gazette 2001/05)**

(54) **SMEKTISCHE FLÜSSIGKRISTALLSCHALT- ODER ANZEIGEVORRICHTUNG MIT HOHEM KONTRAST**

SMECTIC LIQUID CRYSTAL HIGH-CONTRAST CONTROL OR DISPLAY DEVICE

DISPOSITIF DE COMMUTATION OU D'AFFICHAGE SMECTIQUE A CRISTAUX LIQUIDES AVEC CONTRASTE ELEVE

(84) Benannte Vertragsstaaten:
**DE FR GB**

(30) Priorität: **28.07.1999 DE 19934798**

(43) Veröffentlichungstag der Anmeldung:
**29.05.2002 Patentblatt 2002/22**

(73) Patentinhaber: **CLARIANT INTERNATIONAL LTD.**
**4132 Muttenz (CH)**

(72) Erfinder:
- **DÜBAL, Hans-Rolf**
  **D-65343 Eltville (DE)**
- **HORNUNG, Barbara**
  **D-63594 Hasselroth (DE)**
- **NONAKA, Toshiaki**
  **Kakegawa-shi, Shizuoka Pref. 436-0027 (JP)**

(74) Vertreter: **Isenbruck, Günter, Dr.**
**Isenbruck, Bösl, Hörschler, Wichmann, Huhn, Patentanwälte**
**Theodor-Heuss-Anlage 12**
**68165 Mannheim (DE)**

(56) Entgegenhaltungen:
**EP-A- 0 532 210** **EP-A- 0 539 991**
**EP-A- 0 548 548** **US-A- 5 629 788**

- **PATENT ABSTRACTS OF JAPAN vol. 017, no. 453 (E-1417), 19. August 1993 (1993-08-19) & JP 05 102227 A (SEIKO EPSON CORP), 23. April 1993 (1993-04-23)**
- **PATENT ABSTRACTS OF JAPAN vol. 017, no. 654 (P-1653), 3. Dezember 1993 (1993-12-03) & JP 05 216034 A (CANON INC), 27. August 1993 (1993-08-27)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Displays oder elektro-optische Anzeigevorrichtungen basierend auf smektischen Flüssigkristallmischungen als elektro-optisch aktive Schicht gewinnen wegen ihrer hohen Schaltgeschwindigkeit an Bedeutung.

Für die Verwendung von smektischen Flüssigkristallen in elektrooptischen oder vollständig optischen Bauelementen benötigt man entweder Verbindungen. die geneigte bzw. orthogonale smektische Phasen ausbilden und selbst optisch aktiv sind, oder man kann durch Dotierung von Verbindungen, die zwar solche smektischen Phasen ausbilden, selbst aber nicht optisch aktiv sind, mit optisch aktiven Verbindungen ferroelektrische oder elektroklin aktive smektische Phasen induzieren. Die gewünschte Phase soll dabei über einen möglichst großen Temperaturbereich stabil sein, um einen breiten Arbeitsbereich des Displays sicherzustellen. Insbesondere soll der erzielbare Kontrast im gesamten Arbeitsbereich möglichst hoch sein. Flüssigkristalldisplays können grundsätzlich als Aktiv- oder Passivmatrixdisplay betrieben werden.

Bei der sogenannten Aktivmatrix-Technologie (AMLCD) wird üblicherweise ein nicht-strukturiertes Substrat mit einem Aktivmatrix-Substrat kombiniert. An jedem Pixel des Aktivmatrixsubstrates ist ein elektrisch nichtlineares Element, beispielsweise ein Dünnschichttransistor, integriert. Bei dem nichtlinearen Element kann es sich auch um Dioden, Metall-Insulator-Metall- u.ä. Elemente handeln, die vorteilhaft mit Dünnschichtverfahren hergestellt werden und in der einschlägigen Literatur beschrieben sind (s. z.B. T. Tsukuda, TFT/LCD: Liquid Crystal Displays Addressed by Thin-Film Transistors, Gordon and Breach 1996, ISBN 2-919875-01-9 und darin zitierte Literatur).

Aktivmatrix-LCDs werden üblicherweise mit nematischen Flüssigkristallen im TN-(twisted nematics), ECB-(electrically controlled birefringence), VA- (vertically aligned). IPS- (in plane switching) oder OCB- (optically compensated bend) Modus betrieben in jedem Fall wird durch die aktive Matrix an jedem Bildpunkt ein elektrisches Feld individueller Stärke erzeugt, das eine Orientierungsänderung und damit eine Änderung der Doppelbrechung erzeugt, die wiederum im polarisierten Licht optisch sichtbar ist. Ein schwerwiegender Nachteil dieser Verfahren ist die mangelnde Videofähigkeit, d.h. die zu langen Schaltzeiten nematischer Flüssigkristalle. Insbesondere besitzen nematische LCDs nicht die Fähigkeit, scharfe bewegte Bilder darzustellen, wie z.B. bei Sueoka et.al. (K. Sueoka, H. Nakamura und Y. Taira. SID 1997. S. 203-206, ISSN 1083-1312/97/1701-0203) beschrieben.

Unter anderem aus diesem Grunde wurden Flüssigkristallanzeigen, die auf der Kombination aus ferroelektrischen Flüssigkristallmaterialien und aktiven MatrixElementen beruhen, z.B. in WO 97/12355 oder in Ferroelectrics 1996, 179, 141-152 oder bei W.J.A.M. Hartmann (IEEE Trans. Electron. Devices 1989, 36, 9; Pt. 1, Seiten 1895-9, sowie Dissertation Eindhoven, Niederlande 1990) vorgeschlagen, die allerdings aus Gründen eines eingeschränkten Temperaturbereiches und einer schwierigen Reproduzierbarkeit der smektischen Textur nie zur Praxisreife entwickelt wurden.

Während Hartmann die ladungskontrollierte Bistabilität zur Darstellung einer nahezu kontinuierlichen Grauskala ausnutzt, haben Nito et. al. eine monostabile FLC Geometrie vorgeschlagen (Journal of the SID, 1 / 2, 1993, Seiten 163-169), bei der das FLC Material mit Hilfe verhältnismäßig hoher Spannungen derart orientiert wird, daß nur eine stabile Lage entsteht, aus der dann bei Anlegen eines elektrischen Feldes über einen Dünnschichttransistor eine Reihe von Zwischenzuständen erzeugt werden, die bei angepaßter Zellgeometrie zwischen gekreuzten Polarisatoren einer Reihe von verschiedenen Helligkeitsgraden (Grauwerte) entsprechen.

Der Nachteil der FLC von Nito et.al. ist das Auftreten einer Streifentextur, die den Kontrast und die Helligkeit dieser Zelle begrenzt (siehe Abb. 8 des o.a. Zitates). Darüber hinaus ergibt diese Methode lediglich ein Schalten in einem Winkelbereich von bis zu maximal dem einfachen Tiltwinkel, der bei dem von Nito et. al. verwendeten Material bei ca. 22 ° liegt (s.S. 165 Abb. 6) und damit nur eine Transmission von maximal 50 % der Transmission zweier paralleler Polarisatoren ergibt.

Terada et. al. haben eine monostabile FLC-Konfiguration vorgeschlagen (Terada, M., Togano, T., Asao, Y., Moriyama, T., Nakamura, S., Iba, J., vorgestellt bei der Applied Physics Conference, March-28-1999, Tokyo, Japan; Abstract No. 28p-V-8). Bei Terada et.al. wird hinsichtlich der Phasen die Sequenz I-N-C (siehe nachstehende Definition) als ‚hinreichend' definiert. Diese Prototypen sind aber noch nicht über einen größeren Temperaturbereich hinweg praxistauglich, unter anderem deshalb, weil I-N-C in der Praxis zwar eine notwendige, aber keine hinreichende Bedingung ist, sondern die Praxistauglichkeit eine Reihe von zusätzlichen Bedingungen an den Flüssigkristall stellt.

Aufgabe der vorliegenden Erfindung ist daher die Bereitstellung einer geeigneten chiral-smektischen Flüssigkristallmischung sowie einer Schalt- und Anzeigevorrichtung, enthaltend eine solche geeignete chiral-smektische Flüssigkristallmischung, wobei die Flüssigkristallmischung durch ihre vorzüglichen Orientierungseigenschaften und bestimmten günstigen Orientierungswinkel einen sehr hohen Kontrast über einen breiten Temperaturbereich ermöglichen soll.

Voraussetzung für einen sehr hohen Kontrast über einen weiten Temperaturbereich ist eine äußerst geringe Dunkeltransmission der LCD Zelle. Diese wird wiederum erstens nur bei exzellenten Orientierungseigenschaften der Mischung erzielt, da jede Fehlstelle oder jede lokale Abweichung des Direktors von der Dunkelstellung den Kontrast erheblich verringert und zweitens bei nur geringer Veränderung der Orientierung mit der Temperatur. Dieses gilt insbesondere, wenn ein breiter Anwendungstemperaturbereich, z.B. von -10 °C bis +60 °C, bevorzugt 0°C bis +55 °C, speziell 10 °C bis 50 °C betrachtet wird.

Die Aufgabe wird erfindungsgemäß gelöst durch eine Flüssigkristallschalt- oder -anzeigevorrichtung, enthaltend eine chiralsmektische Flüssigkristallmischung in monostabilder Orientierung, die dadurch gekennzeichnet ist, dass in der Flüssigkristallmischung das Verhältnis Δ/Θ des Winkels zwischen der Reiberichtung und der smektische Schichtennormale zum Tiltwinkel mindestens 0,41 beträgt oder die Phasenfolge I-N-C vorliegt und der Winkel p zwischen Reiberichtung und monostabiler Position mindestens 1° beträgt, die Phasenfolge I-N-C vorliegt und die Differenz der Tiltwinkel, gemessen bei 15°C und 5°C unterhalb Tc, dem oberen Ende des Existenzbereiches der optisch aktiven smektischen Phase, weniger als 9,5° beträgt.

Die Aufgabe wird erfindungsgemäß vorzugsweise gelöst durch eine chiral-smektische Schalt- oder -anzeigevorrichtung, in der man eine chiral-smektische Flüssigkristallmischung der Phasenfolge I-N-C verwendet , wobei die Symbole folgende Bedeutung besitzen:

I = isotrope Phase

N = nematische bzw. cholesterische Phase

C = smektische C Phase (einschließlich aller Untergattungen der C-Phase) oder eine andere getiltete Phase, chiral oder chiral dotiert (der in der Literatur übliche * ist aus Gründen der Einfachheit der Schreibweise weggelassen), und wobei so orientiert wird, daß das Winkel verhältnis w, definiert als

$$w = \Delta/\Theta \text{ mindestens 0.41 ist,}$$

wobei

Δ der Winkel zwischen Reiberichtung (Fig. 1, Achse 1) und der smektischen Schichtennormale (Fig. 1, Achse 2) ist, wobei unter Reiberichtung auch eine Vorzugsrichtung durch andere Verfahren als die Reibebehandlung verstanden wird, z.B. das Foto-Alignment o.ä., und Θ der Tiltwinkel ist, vorzugsweise durch das Schaltverhalten mit Hilfe elektrischer Spannungen oder Röntgenuntersuchung ermittelt (Fig. 1, Achsen 2 und 4' bzw. 2 und 4).

Bevorzugt sind Werte von w mindestens 0.45, besonders bevorzugt > 0.53, speziell zwischen 0.55 und 0.99, ganz speziell zwischen 0.60 und 0.85.

Besonders bevorzugt ist w mindestens 0.41 bei gleichzeitiger Einschränkung des Tiltwinkelbereiches auf 19° bis 39°, vorzugsweise 20° bis 36°, besonders bevorzugt 22° bis 34°, ganz besonders bevorzugt 23° bis 33°, speziell 24° bis 32° (bei 25 °C).

Die Aufgabe wird zudem erfindungsgemäß gelöst durch eine chiral-smektische Schalt- oder -anzeigevorrichtung mit einer chiral-smektischen Flüssigkristallmischung der Phasenfolge I-N-C in monostabiler Orientierung, wobei so orientiert wird, daß der Winkel ρ zwischen Reiberichtung und monostabiler Position (maximale Dunkelstellung, Achsen 1 und 3 in Fig. 1) mindestens 1°, vorzugsweise mindestens 1.3°, besonders bevorzugt mindestens 1.6°, speziell mindestens 1.9° beträgt.

Bevorzugt sind Kombinationen der Merkmale der ersten und zweiten, ersten und dritten, zweiten und dritten oder ersten bis dritten vorstehend beschriebenen Ausführungsformen der erfindungsgemäßen Flüssigkristallschalt- und Anzeigevorrichtung.

Besonders bevorzugt ist w mindestens 0.41 bei gleichzeitiger Einhaltung des Winkels ρ größer 1°.

Besonders bevorzugt ist w mindestens 0.41 bei gleichzeitiger Einschränkung des Tiltwinkelbereiches zwischen 19° und 39° (bei 25°C), sowie als zusätzliche Bedingung Winkel ρ größer 1° .

Besonders bevorzugt ist w mindestens 0.41 bei gleichzeitiger Einschränkung des Tiltwinkelbereiches auf 19° bis 39° (bei 25°C), Winkel ρ größer 1° sowie als zusätzliche Bedingung Spontanpolarisation < 150 $nC/cm^2$.

Bevorzugt wird eine Mischung mit der Phasenfolge I-N-C, deren Spontanpolarisation im Bereich der Arbeitstemperatur <150 $nC/cm^2$ ist, besonders bevorzugt <70 $nC/cm^2$, ganz besonders bevorzugt <35 $nC/cm^2$, speziell <15 $nC/cm^2$, ganz speziell im Bereich von 4.1 bis 9.9 $nC/cm^2$.

Solche Displays weisen eine sehr defektarme oder völlig defektfreie Orientierung und eine sehr dunkle Dunkelstellung und damit einen hohen Kontrast über einen weiten Temperaturbereich auf. Es kann sich beispielsweise um Aktivmatrixdisplays oder Passivmatrixdisplays handeln.

Die Aufgabe wird ebenfalls erfindungsgemäß gelöst durch eine chiral-smektische Schalt- oder -anzeigevorrichtung, speziell einem Aktivmatrixdisplay enthaltend eine Flüssigkristallmischung und durch die Flüssigkristallmischung selbst, die die Phasen(übergangs)folge

I-N-C

mit einer mäßig, d.h. nicht zu schwach und nicht zu stark unterdrückten smektischen A-Phase besitzen, was sich durch das folgende Merkmal ausdrückt:

- der Zusatz von zehn (10) Gew%, bezogen auf die Gesamtmischung, des smektisch-A-Induzierers, Komponente

A, CAS-Reg.-Nr. : 156682-16-5, Bezeichnung: 5-[6-(Octyloxy)-3-pyridinyl]-2-(octyloxy) pyrimidin

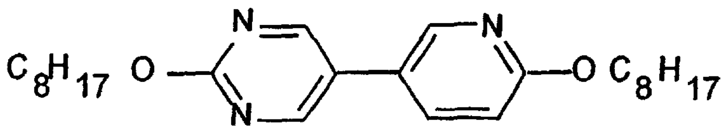

führt zu einem Auftreten eines smA-Phasenbereiches von weniger als 5.5 °C (Phasenbreite), mindestens jedoch von 0.1 °C bei Zugabe von 25 Gew%, bezogen auf die Gesamtmischung, der Komponente A.

Die Erfindung betrifft auch ein Verfahren zum Auffinden geeigneter Flüssigkristallmischungen, das die obigen Verfahrensschritte beinhaltet.

Darüber hinaus ist es vorteilhaft, wenn die LCD-Zelle einen asymmetrischen Aufbau besitzt, was bedeutet, daß Ober- und Unterseite der Zelle sich in mindestens einem Merkmal, abgesehen von einem möglichen Aktivmatrixaufbau (Dünnschicht-Transistor) selber, unterscheiden. Dies ist insbesondere der Fall bei

- Unsymmetrischen oder unsymmetrisch behandelten Orientierungsschichten (z.B. bei anti-paralleler Reibung)
- Weglassen einer der beiden Orientierungsschichten
- Weglassen oder Verändern des Reibeschrittes bei einer der beiden Orientierungsschichten
- Einbringen einer unsymmetrischen Schichtstruktur, z.B. durch zusätzliche Isolierschichten mit unterschiedlichen Eigenschaften auf Ober- und Unterseite
- Allen Maßnahmen, die letztlich bewirken, daß die Flüssigkristalldomäne einer unsymmetrischen Umgebung ausgesetzt ist, bezogen auf eine zu den Elektrodenflächen parallel gedachte Symmetrieebene.

Ausdrücklich einbezogen ist die vorteilhafte Verwendung der erfindungsgemäßen Materialien und Mischungen für Aktivmatrix-Displays, antiferroelektrische Displays sowie smektische Displays, wobei unter Display jegliche Art von optischer Anzeigeund Schaltvorrichtung ungeachtet von Größe, Aufbau, Lichtführung, Ansteuerung und Verwendung verstanden werden soll.

Insbesondere wird unter Aktivmatrixdisplay im Sinne der vorliegenden Erfindung auch ein LCD verstanden, bei dem eines der beiden Substrate durch die Rückseite eines IC-Chips (IC = integrated circuit) ersetzt wird, wie beispielsweise bei D.M. Walba, Science 270, 250-251 (1995) oder http://www.dispaytech.com beschrieben. also die sogenannte LCOS-Technik (LC On Silicon).

Insbesondere wird unter Aktivmatrixdisplay im Sinne der vorliegenden Erfindung auch ein LCD verstanden, bei dem eines der beiden Substrate durch die Rückseite einer Plasmazelle (plasma-addressed LCD) ersetzt wird.

Generell werden Displays mit einem Elektrodenabstand von 0,7 bis 3,0 µm, speziell Aktivmatrixdisplays mit einem Elektrodenabstand von 0,8 bis 2,0 µm bevorzugt, die eine chiral-smcktische Mischung mit schwach unterdrückter smA-Phase enthalten.

Besonders bevorzugt ist ein Display, das mit gepulster oder schnell wechselnder Hintergrundbeleuchtung (sogenannte 'sequential backlight' Technik) arbeitet.

Die Aufgabe wird auch gelöst durch die Verwendung einer chiral-smektischen Flüssigkristallmischung mit der Phasenfolge I-N-C als elektro-optisch aktive Schicht in monostabilen Schalt- und Anzeigevorrichtungen oder Displays, wobei die chiral-smektische Flüssigkristallmischung folgende Eigenschaftskombination besitzt:

TC größer als 50 °C und
$T_{NI}$ kleiner als 105 °C und
19° < Tiltwinkel (25 °C) < 39 ° und
Spontanpolarisation kleiner 150 nC/cm$^2$ und
Ganghöhe der cholesterischen Helix größer 2 µm und

die Differenz der Tiltwinkel, gemessen bei 15 °C und 5 °C unterhalb Tc, dem oberen Ende des Existenzbereiches der optisch aktiven smektischen Phase, weniger als 9.5 °C beträgt. Dabei ist vorteilhaft, wenn die Mischung mindestens 20 Gewichtsprozent (in Summe) an N- und/oder S-heterocyelischen Verbindungen enthält. Insbesondere Thiophenderivate sind hier bevorzugt.

In der Zeichnung zeigt

Fig. 1 schematisch die Lage der einzelnen verwendeten Winkel zueinander

Fig. 2 das Phasendiagramm zu Beispiel 1

Fig. 3 die optische Transmission einer Testzelle in Abhängigkeit von der Spannung für eine Mischung aus Beispiel 6.

Die Erfindung wird durch die nachstehenden Beispiele näher erläutert.

Beispiel 1

Zur Illustration der mäßig unterdrückten smA-Phase wird eine Mischung erstellt aus einer Mischung M1 und der Komponente B:

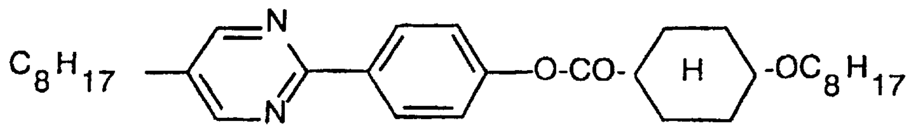

Dabei wird die Konzentration der Komponente B kontinuierlich variiert. Man erhält so einen zweidimensionalen Ausschnitt aus dem Phasendiagramm der Mischung, das in Fig. 2 dargestellt ist.

Tabelle 1: Zusammensetzung der Testmischung M1:

| 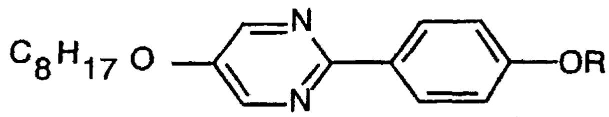 | Gew% |
|---|---|
| R = $C_8H_{17}$ | 14,43 |
| R = $C_6H_{13}$ | 29,12 |
| R = $C_4H_9$ | 28,47 |
| R = $C_{10}H_{21}$ | 27,98 |
| Summe Gew% | 100,00 |

Der trikritische Punkt NAC liegt bei ([M1]=66 Gew%, [B]=34 Gew%), wie in Fig.2 dargestellt (in Fig.2 bedeuten T die Celsiustemperatur, [B] die Gewichtsprozente der Komponente B, bezogen auf die gesamte Mischung). Die Definition für I, N, C ist vorstehend angegeben. A bedeutet smektisch-A-Phase. Die erfindungsgemäße Umgebung des NAC-Punktes wird wie folgt ermittelt.
Es werden sechs Testmischungen mit den folgenden Zusammensetzungen erstellt:

Tabelle 2:

| Testmischungen P-U und deren Phasenfolgen | | | |
|---|---|---|---|
| Mischung | [M1] | [B] | Phasenfolge |
| | Gew% | | Phasen, Temperatur in °C |
| P | 75 | 25 | C 85,3 A 90,6 N 108 I |
| Q | 66 | 34 | C 85.6 (NAC) 85.6 N 115 I |
| R | 60 | 40 | C 85.6 N 116 I |
| S | 55 | 45 | C 86,5 N 119 I |
| T | 50 | 50 | C 87 N 122 I |
| U | 20 | 80 | C 92.7 N 145 I |

Die so erhaltenen Mischungen werden mit 10 Gew% der Komponente A (wie vorstehend definiert) als smA-Induzierer versetzt. Man erhält die folgenden Phasenbereiche:

Tabelle 3:

| Testmischungen PA-UA und deren Phasenfolgen nach Zugabe von Komponente A (siehe oben, 10 Gew%) | | | |
|---|---|---|---|
| Mischung | 90 Gew% | Phasenfolge mit 10 Gew% A | Breite der smA-Phase |
| | | Phasen. Temperatur in °C | °C |
| PA | P | C 82.6 A 94.3 N 103 I | 11.7 |
| QA | Q | C 85.5 A 93.0 N 106 I | 7.5 |
| RA | R | C 86.8 A 92.5 N 109 I | 5.7 |
| SA | S | C 88.2 A 90.6 N 112 I | 2.4 |
| TA | T | C 88.5 (NAC) 88.5 N 114 I | 0.0 |
| UA | U | Keine smA-Phase | 0.0 |

Hierbei zeigt sich, daß die Mischungen U,T,S im bevorzugten Bereich der vorliegenden Erfindung liegen, da sie weit genug vom multikritschen Punkt NAC entfernt liegen und die smA-Phase stark genug unterdrückt ist. Insbesondere bei den Mischungen T, S und U treten bei Zugabe von 25 % der Komponente A smA-Phasenbereiche von mehr als 0.1°C auf.

Die Spontanpolarisation läßt sich nahezu beliebig einstellen durch Zugabe eines geeigneten chiralen Stoffes oder Stoffgemisches. Z.B. erhält man, ausgehend von Mischung T, durch Zugabe von 5 Gew% der Komponente C8 (siehe Beispiel 3 unten) eine chiral-smektische Mischung der Phasenfolge
I 115 N 84 C.
mit Ps= -7,8 nC/cm$^2$ und einem Tiltwinkel von 27 ° bei 25 °C.

Beispiel 2 LCD Testzelle

Eine LCD Testzelle wird hergestellt aus zwei handelsüblichen, mit Indium-Zinnoxid leitfähig transparent beschichteten Glasplatten. Diese werden mit der Orientierungsschicht LQT-120 (Hersteller: Hitachi Chemicals KK), welche mit N-Methylpyrrolidon auf 8.3% ihres ursprünglichen Feststoffgehaltes verdünnt wurde, durch Spin-coating beschichtet (2500 U/min, 10 sec), durch Erhitzen gehärtet (230°C, 1 Stunde) und anschließend einem Reibeprozeß zwecks Orientierung unterzogen (Reibestoff: Rayon-Typ YA-20-R*, clearance 0.2 mm,
1 mal, 700 U/min Walzendrehzahl, 10 cm/s Substratgeschwindigkeit, 10 cm Rollendurchmesser).

Die geriebenen Gläser werden bei antiparalleler Ausrichtung der Reiberichtung zu Testzellen verklebt und mittels Abstandhalter auf einen Abstand von 1,3 µm eingestellt.

Die FLC-Mischung wird in die Zelle gefüllt und durch Abkühlen zunächst in der nematischen bzw. cholesterischen Phase orientiert. Beim weiteren Abkühlen wird eine Gleichspannung von 3 Volt angelegt und die Zelle mit einer Abkühlrate von 2 K/min in den Bereich der smC Phase (chiral smektisch C) überführt. Dabei bildet sich bei Verwendung erfindungsgemäßer Mischungen eine monostabile Domäne aus.

Die Bestimmung der Reiberichtung, sofern diese nicht ohnehin bekannt ist, kann experimentell durch eine Überführung in die nematische Phase durch Erwärmung und anschließende Bestimmung der Dunkelstellung zwischen gekreuzten Polarisatoren geschehen.

Die Bestimmung des Tiltwinkels kann experimentell durch ein Beschalten der Zelle bei Betriebstemperatur erfolgen. Hier beobachtet man eine Sättigung der optischen Transmissionen bei positiver und negativer Spannung (typisch 20 V), denen bestimmte Drehwinkel zugeordnet sind (Fig. 1, Achsen 4, 4'). Die Winkeldifferenz bei Sättigung ergibt den Wert 2Θ (= doppelter Tiltwinkel), die Winkelhalbierende gibt die Schichtennormale (Fig. 1, Achse 2). Die Dunkelposition ist einfach bestimmbar.

Beispiel 3

Es werden Testmischungen aus den folgenden Komponenten C1-C8 erstellt (Mischungen V,W,X, siehe Tabelle 4). Die Phasenübergänge und einige Eigenschaften der in Beispiel 2 beschriebenen, mit diesen Mischungen hergestellten Zelle sind in Tabelle 5 zusammengefaßt.

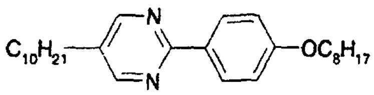

Komponente C1

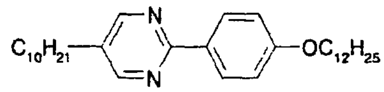

Komponente C2

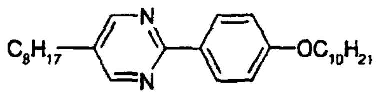

Komponente C3

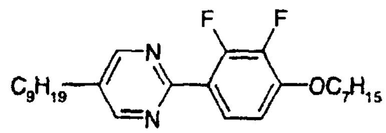

Komponente C4

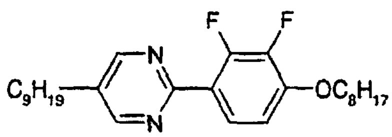

Komponente C5

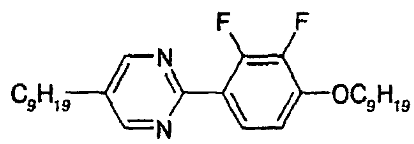

Komponente C6

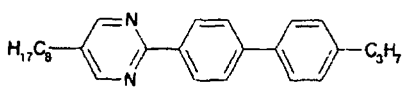

Komponente C7

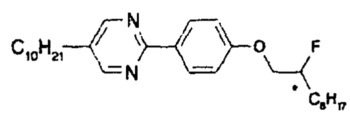

Komponente C8

Tabelle 4:

| Zusammensetzungen der Mischungen V,W,X | | | |
|---|---|---|---|
| Komponente | V | W | X |
| C1 | 14,4% | 7,2% | |
| C2 | 14,4% | 7,2% | |
| C3 | 14,4% | 7,2% | |
| C4 | 14,4% | 21,6% | 28.8% |
| C5 | 14,4% | 21,6% | 28,8% |
| C6 | 14,4% | 21,6% | 28,8% |
| C7 | 10,0% | 10,0% | 10,0% |
| C8 | 3,6% | 3,6% | 3,6% |

Tabelle 5:

| Eigenschaften der chiral-smektischen Mischungen sowie der Zelle. die nach dem in Beispiel 2 beschriebenen Verfahren hergestellt wurde | | | | | | | | | |
|---|---|---|---|---|---|---|---|---|---|
| | | | | 10V, 60Hz | | | | | |
| Mischung | Tc | ΔSa | Ps (nC/ $cm^2$) 25°C | $\Theta_{Tc-10}$ | ρ | Σ | /Θ Δ | | w= Δ/Θ |
| V | 62,8 | 1,5 | 3,7 | 19,9 | - | 19,9 | 1,0 | 0 | 0 |
| W | 56,1 | 0 | 4,8 | 23,1 | 3,6 | 13,7 | 0,59 | 9,4 | 0,41 |
| X | 59,2 | 0 | 5,9 | 23,9 | 4 | 12,2 | 10,51 | 11,7 | 0,49 |

Hierbei besitzen die Mischungen W und X die Phasenfolge I-N-C und ein Verhältnis von Δ/Θ von 0.41 (V) und 0,49 (W). Dagegen führt die Verwendung von Mischung V mit der Phasenfolge I-N-A-C zu keiner vorteilhaften Verwendbarkeit im Sinne der vorliegenden Erfindung.

Beispiel 4

Die Mischungen W, X werden mit der Komponente A gemischt, wiederum so, daß in diesen neuen Mischungen die Konzentration der Komponente A 10 Gewichtsprozent beträgt. Man erhält folgende smA-Phasenbreiten (ΔSa):

Tabelle 6:

| smA-Phasenbereich mit 10 Gew% der Komponente A in °C | | |
|---|---|---|
| **Mischung** | **Tc** | **ΔSa** |
| W | 59 | 4 |
| X | 62 | 2.5 |

Hieraus ergibt sich. daß die Mischungen W und X eine stark genug unterdrückte smA-Phase besitzen, die bei Zugabe von 10% des smA-Induzierers hervortritt, und eine Breite von weniger als 5,5°C besitzt. Bei Zugabe von 25 Gew% der Komponente A werden smA-Phasenbereiche von mehr als 0,1°C erhalten.

Beispiel 5

Die mit den Mischungen W und X gefüllten Testzellen (Tabelle 2) werden auf ihre Schalteigenschaften untersucht. Dazu wird die optische Transmission zwischen gekreuzten Polarisatoren in Abhängigkeit der anliegenden Spannung (bipolare Pulsfolgen mit 60 Hz Frequenz = 8,3 ms Breite) untersucht. Man erhielt folgende Ergebnisse bei einer Temperatur von 30 °C :

Tabelle 7:

| Analoge Grauskala mit Mischungen W und X | | |
|---|---|---|
| Spannung (Volt) | Transmission (%) Mischung W | Transmission (%) Mischung X |
| 0 | 0 | 0 |
| 0.5 | 2 | 14,8 |
| 1 | 5,4 | 24,2 |
| 1.5 | 12 | 40,2 |
| 2 | 21,4 | 48,4 |
| 2.5 | 38,2 | 53,8 |
| 3 | 48,4 | 57.6 |

Tabelle 7: (fortgesetzt)

| Analoge Grauskala mit Mischungen W und X | | |
|---|---|---|
| Spannung (Volt) | Transmission (%) Mischung W | Transmission (%) Mischung X |
| 3.5 | 54 | 60,4 |
| 4 | 59,6 | 63,2 |
| 4.5 | 63,2 | 65 |
| 5 | 65,8 | 66,6 |
| 8 | 71,2 | 69,6 |
| 10 | 72,2 | 70 |
| Schaltzeiten (10 V) Mischung W: 0.22 ms (0-50%) bzw. 0.15 ms (100-50%)<br>Schaltzeiten (10 V) Mischung X: 0.20 ms (0-50%) bzw. 0.12 ms (100-50%) | | |

Beide Mischungen mit mäßig, aber stark genug unterdrückter smA-Phase lassen sich vorteilhaft verwenden, da eine analoge Grauskala und Submillisekunden- Schalten mit niedrigen Werten der Spontanpolarisation realisiert werden.

Beispiel 6

Es werden acht weitere Testmischungen hergestellt, enthaltend die folgenden Komponenten:

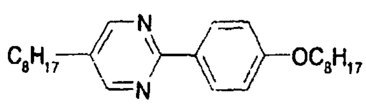

Komponente C9

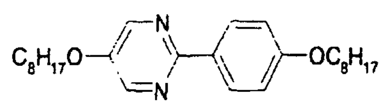

Komponente C10

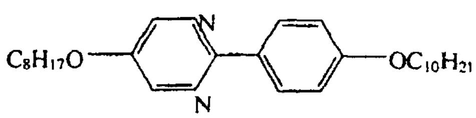

Komponente C11

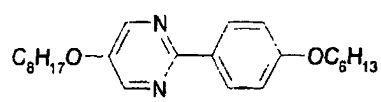

Komponente C12

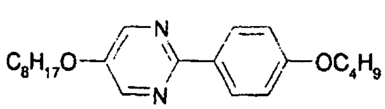

Komponente C13

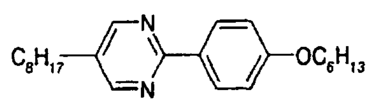

Komponente C14

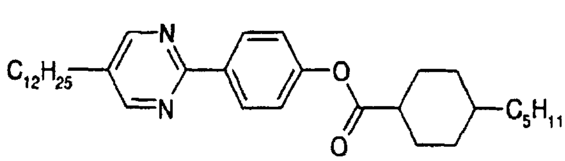

Komponente C15

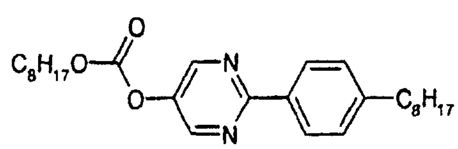

Komponente C16

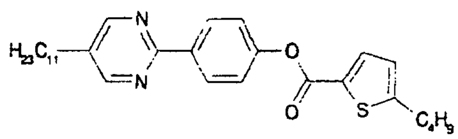

Komponente C17

Tabelle 8:

| Zusammensetzungen der Testmischungen Y1 bis Y8. Angaben in Gewichtsprozent. | | | | | | | | |
|---|---|---|---|---|---|---|---|---|
| **Komponente** | **Y1** | **Y2** | **Y3** | **Y4** | **Y5** | **Y6** | **Y7** | **Y8** |
| C9 | 8,5% | 9,7% | 10,8% | 12,0% | 13,0% | 9,6% | 8,5% | 7,4% |
| C10 | 2,8% | 3,2% | 3,6% | 4,0% | 4,4% | 3,2% | 2,8% | 2,5% |
| C3 | 6,8% | 7,7% | 8,6% | 9,5% | 10,4% | 7,7% | 6,8% | 5,9% |
| C12 | 5,7% | 6,5% | 7,3% | 8,1% | 8,8% | 6,5% | 5,7% | 5,0% |
| C13 | 5,6% | 6,4% | 7,1% | 7,9% | 8,6% | 6,4% | 5,6% | 4,9% |
| C11 | 5,5% | 6,3% | 7,0% | 7,8% | 8,5% | 6,3% | 5,5% | 4,8% |
| C14 | 8,8% | 10,0% | 11,1% | 12,4% | 13,5% | 10,0% | 8,8% | 7,7% |
| C15 | 12,3% | 14,0% | 15,6% | 17,3% | 18,9% | 13,9% | 12,3% | 10,7% |
| C16 | 10,0% | 10,0% | 10,0% | 10,0% | 10,0% | 9,0% | 7,9% | 6,9% |
| C4 | 10,0% | 7,5% | 5,0% | 2,5% | 0,0% | 4,5% | 4,0% | 3,4% |
| C6 | 10,0% | 7,5% | 5,0% | 2,5% | 0,0% | 4,5% | 4,0% | 3,4% |
| C5 | 10,0% | 7,5% | 5,0% | 2,5% | 0,0% | 4,5% | 4,0% | 3,4% |
| C17 | 0,0% | 0,0% | 0,0% | 0,0% | 0,0% | 10,0% | 20,0% | 30,0% |
| C8 | 4,0% | 4,0% | 4,0% | 4,0% | 4,0% | 4,0% | 4,0% | 4,0% |

Die Mischungen Y1 bis Y8 wurden nun auf ihre Schalteigenschaften, auf die Qualität der Orientierung, auf die Temperaturabhängigkeit des Kontrastes und des Tiltwinkels, auf die Winkel gemäß Fig. 1, das Winkelverhältnis w sowie auf das Maß der Unterdrückung der smektischen A Phase hin untersucht. Die experimentellen Ergebnis sind in Tabelle 9 zusammengefaßt. Dabei wurden die Größen TK (Temperaturabhängigkeit des Kontrastes) und Orientierung durch optische Inspektion und Messungen in drei Stufen (+ gut, 0 mittelmäßig, - schlecht) eingestuft. Die Größe TT ergibt sich aus Messungen der Temperaturabhängigkeit des Tiltwinkels bei 5 °C (Θ5) und 15 °C (Θ15) unterhalb $T_c$, dem Ende des smC-Existenzbereiches. Dann ergibt sich

$$TT = (\Theta 15 - \Theta 5)/10.$$

Die Größen Vo und Vs sind in Fig. 3 definiert (Schwellspannung bzw. Sättigungsspannung). Fig. 3 stellt die optische Transmission einer Testzelle in Abhängigkeit von der Spannung für die Mischung Y7, die sehr gut geeignet ist, dar.

Tabelle 9:

| Meßdaten der Testmischungen Y1 bis Y8 | | | | | | | | |
|---|---|---|---|---|---|---|---|---|
| **Meßgröße [Einheit]** | **Y1** | **Y2** | **Y3** | **Y4** | **Y5** | **Y6** | **Y7** | **Y8** |
| $T_{NI}$ [°C] | 76 | 79 | 83 | 85 | 86 | 82 | 84 | 84 |
| $T_{NA}$ [°C] | | | | | 68.8 | | | |
| $T_c$ [°C] | 62.8 | 64.6 | 66.1 | 67.0 | 67.5 | 63.6 | 60.7 | 59.1 |

Tabelle 9: (fortgesetzt)

| Meßdaten der Testmischungen Y1 bis Y8 | | | | | | | | |
|---|---|---|---|---|---|---|---|---|
| **Meßgröße [Einheit]** | **Y1** | **Y2** | **Y3** | **Y4** | **Y5** | **Y6** | **Y7** | **Y8** |
| Δ smA [°C] | 0 | 0 | 0 | 0 | 1.3 | 0 | 0 | 0 |
| Θ [°] 20 V, Tc-30°C | 29.5 | 28.3 | 27.6 | 26.0 | 23.7 | 28.2 | 29.0 | 29.6 |
| Δ [°] | 20.4 | 18.5 | 14.7 | 10.6 | 0 | 18.7 | 22.4 | 23.6 |
| ρ [°] | 3.4 | 3.5 | 3.3 | 3.5 | | 3.0 | 2.2 | 3.0 |
| Σ [°] | 9.1 | 9.8 | 12.9 | 15.4 | 23.7 | 9.5 | 6.6 | 6 |
| w = Δ/Θ | 0.692 | 0.654 | 0.533 | 0.408 | 0.000 | 0.663 | 0.772 | 0.797 |
| Σ/Θ | 0.308 | 0.346 | 0.467 | 0.592 | 1.000 | 0.337 | 0.228 | 0.203 |
| ρ/Σ | 0.374 | 0.357 | 0.256 | 0.227 | | 0.316 | 0.333 | 0.500 |
| Δ smA* [°C] +10% Komp. A | 3.2 | 3.3 | 5.4 | 5.7 | 7.9 | 0.8 | 0.0 | 0.0 |
| Vo [Volt] | 0.8 | 0.7 | 0.3 | 1.0 | - | 0.8 | 1.0 | 0.3 |
| Vs [Volt] | 6 | 6 | 7 | 6 | - | 8 | 4.5 | 3.8 |
| Orientierung | + | + | 0 | 0 | - | + | + | + |
| TK (s. Text) | 0 | 0 | - | - | - | + | + | + |
| TT (s. Text) | 0.61 | 0.62 | 0.72 | 0.95 | 0.75 | 0.49 | 0.38 | 0.29 |
| Gesamtbewert ung der Zelle | + | + | 0 | - | - | + | + | + |

**Patentansprüche**

1. Flüssigkristallschalt- oder -anzeigevorrichtung, enthaltend eine chiral-smektische Flüssigkristallmischung in monostabiler Orientierung, **dadurch gekennzeichnet, daß** in der Flüssigkristallmischung das Verhältnis Δ/Θ des Winkels zwischen der Reiberichtung und der smektischen Schichtennormale zum Tiltwinkel mindestens 0,41 beträgt, oder die Phasenfolge I-N-C vorliegt und der Winkel ρ zwischen Reiberichtung und monostabiler Position mindestens 1° beträgt, oder die Phasenfolge I-N-C vorliegt und die Differenz der Tiltwinkel, gemessen bei 15 °C und 5 °C unterhalb Tc, dem oberen Ende des Existenzbereiches der optisch aktiven smektischen Phase, weniger als 9.5° beträgt.

2. Flüssigkristallschalt- oder -anzeigevorrichtung nach Anspruch 1, **dadurch gekennzeichnet, daß** die Flüssigkristallmischung die Phasenfolge I-N-C aufweist und bei 25°C der Tiltwinkel Θ zwischen 19° und 39° liegt.

3. Flüssigkristallschalt- oder -anzeigevorrichtung nach einem der Ansprüche 1 oder 2, **dadurch gekennzeichnet, daß** die Mischung eine Spontanpolarisation von weniger als 150 $nC/cm^2$ besitzt.

4. Flüssigkristallschalt- oder -anzeigevorrichtung nach einem der Ansprüche 1 oder 2, **dadurch gekennzeichnet, daß** die Vorrichtung ein Aktivmatrixdisplay oder Passivmatrixdisplay ist.

5. Verwendung einer chiral-smektischen Flüssigkristallmischung, wie sie in Anspruch 1 definiert ist, mit der Phasenfolge I-N-C als elektro-optisch aktive Schicht in monostabilen Schalt- und Anzeigevorrichtungen oder Displays, wobei die chiral-smektische Flüssigkristallmischung folgende Eigenschaften besitzt:

   Tc größer als 50 °C und
   $T_{NI}$ kleiner als 105 °C und
   19° < Tiltwinkel (25 °C) < 39 ° und
   Spontanpolarisation kleiner 150 $nC/cm^2$ und
   Ganghöhe der cholesterischen Helix größer 2 µm und

   die Differenz der Tiltwinkel, gemessen bei 15 °C und 5 °C unterhalb Tc, dem oberen Ende des Existenzbereiches

der optisch aktiven smektischen Phase, weniger als 9.5 °C beträgt.

6. Verwendung nach Anspruch 5, **dadurch gekennzeichnet, daß** die Schalt- und Anzeigevorrichtung wie in einem der Ansprüche 1 bis 4 definiert ist.

7. Verwendung nach Anspruch 6, **dadurch gekennzeichnet, daß** die Mischung in Summe mindestens 20 Gew% an stickstoff- oder schwefelhaltigen heterocyclischen Verbindungen enthält.

8. Verwendung nach Anspruch 7, **dadurch gekennzeichnet, daß** die Mischung mindestens ein Thiophenderivat enthält.

9. Chiral-smektische Flüssigkristallmischung mit der Phasenfolge I-N-C, **dadurch gekennzeichnet, daß** der Zusatz von 10 Gew%, bezogen auf die Gesamtmischung, des smektisch-A-Induzierers 5-[6-(Octyloxy)-3-pyridinyl]-2-(octyloxy)pyrimidin zu einem Auftreten eines smA-Phasenbereichs von weniger als 5,5°C führt und der Zusatz von 25 Gew%, bezogen auf die Gesamtmischung, zu einem Auftreten eines smA-Phasenbereichs von mindestens 0,1°C führt.

## Claims

1. A liquid-crystal switching or display device comprising a chiral smectic liquid-crystal mixture in monostable alignment, **characterized in that** the ratio $\Delta/\Theta$ of the angle between the rubbing direction and the smectic layer normal to the tilt angle in the liquid-crystal mixture is at least 0.41, or **in that** the liquid-crystal mixture has the phase sequence I-N-C and the angle $\rho$ between the rubbing direction and the monostable position is at least 1°, or **in that** the liquid-crystal mixture has the phase sequence I-N-C and the difference of the tilt angles measured at 15°C and 5°C below Tc, the upper limit of the range of existence of the optically active smectic phase, is less than 9.5°.

2. A liquid-crystal switching or display device as claimed in claim 1, **characterized in that** the liquid-crystal mixture has the phase sequence I-N-C and the tilt angle $\Theta$ at 25°C is between 19° and 39°.

3. A liquid-crystal switching or display device as claimed in one of claims 1 or 2, **characterized in that** the mixture has a spontaneous polarization of less than 150 $nC/cm^2$.

4. A liquid-crystal switching or display device as claimed in one of claims 1 or 2, **characterized in that** the device is an active-matrix or passive-matrix display.

5. The use of a chiral smectic liquid-crystal mixture as defined in claim 1, having the phase sequence I-N-C as electro-optically active layer in monostable switching and display devices or displays, wherein the chiral smectic liquid-crystal mixture has the following properties:

   $T_c$ greater than 50°C and
   $T_{NI}$ less than 105°C and
   19° < tilt angle (25°C) < 39° and
   spontaneous polarization less than 150 $nC/cm^2$ and
   pitch of the cholesteric helix greater than 2 μm and

   the difference of the tilt angles measured at 15°C and 5°C below Tc, the upper limit of the range of existence of the optically active smectic phase, is less than 9.5°.

6. The use as claimed in claim 5, **characterized in that** the switching and display device is as defined in one of claims 1 to 4.

7. The use as claimed in claim 6, **characterized in that** the total content of nitrogen- or sulfur-containing heterocyclic compounds in the mixture is at least 20% by weight.

8. The use as claimed in claim 7, **characterized in that** the mixture contains at least one thiophene derivative.

9. A chiral smectic liquid-crystal mixture having the phase sequence I-N-C, **characterized in that** the addition of

10% by weight, based on the total mixture, of the smectic A inducer 5-[6-(octyloxy)-3-pyridinyl]-2-(octyloxy)pyrimidine leads to the occurrence of an smA phase range of less than 5.5°C, and the addition of 25% by weight, based on the total mixture, leads to the occurrence of an smA phase range of at least 0.1°C.

## Revendications

1. Dispositif de commutation ou d'affichage à cristaux liquides, contenant un mélange de cristaux liquides chiral-smectique dans une orientation monostable, **caractérisé en ce que**, dans le mélange de cristaux liquides le rapport Δ/Θ de l'angle entre la direction de frottement et la normale à la couche smectique sur l'angle d'inclinaison s'élève à au moins 0,41, ou la suite de phases est I-N-C et l'angle ρ entre la direction de frottement et la position monostable s'élève à au moins 1 °, ou la suite de phases est I-N-C et la différence des angles d'inclinaison, mesurés à 15 °C et 5 °C au-dessous de $T_c$, à l'extrémité supérieure du domaine d'existence de la phase smectique optiquement active, est inférieure à 9,5 °.

2. Dispositif de commutation ou d'affichage à cristaux liquides selon la revendication 1, **caractérisé en ce que** le mélange de cristaux liquides présente la suite de phases I-N-C et l'angle d'inclinaison e se situe à 25 °C entre 19 ° et 39 °.

3. Dispositif de commutation ou d'affichage à cristaux liquides selon une des revendications 1 ou 2, **caractérisé en ce que** le mélange possède une polarisation spontanée de moins de 150 nC/cm$^2$.

4. Dispositif de commutation ou d'affichage à cristaux liquides selon une des revendications 1 ou 2, **caractérisé en ce que** le dispositif est un afficheur à matrice active ou un afficheur à matrice passive.

5. Utilisation d'un mélange de cristaux liquides chiral-smectique, comme ils sont définis à la revendication 1, avec la suite de phases I-N-C comme couche électro-optiquement active dans des dispositifs de commutation et d'affichage ou des afficheurs monostables, dans laquelle le mélange de cristaux liquides chiral-smectique possède les caractéristiques suivantes :

   Tc supérieure à 50 °C et
   $T_{NI}$ inférieure à 105 °C et
   19 ° < angle d'inclinaison (25 °C) < 39 °C et
   Polarisation spontanée inférieure à 150 nC/cm$^2$ et
   Pas de l'hélice cholestérique supérieur à 2 µm et

   la différence des angles d'inclinaison, mesurés à 15 °C et à 5 °C au-dessous de $T_c$, à l'extrémité supérieure du domaine d'existence de la phase smectique optiquement active, est inférieure à 9,5 °.

6. Utilisation selon la revendication 5, **caractérisée en ce que** le dispositif d'affichage et de commutation est défini comme dans l'une des revendications 1 à 4.

7. Utilisation selon la revendication 6, **caractérisée en ce que** le mélange contient au total au moins 20 % en poids de composés hétérocycliques azotés ou soufrés.

8. Utilisation selon la revendication 7, **caractérisée en ce que** le mélange contient au moins un dérivé thiophène.

9. Mélange ce cristaux liquides chiral-smectique avec la suite de phases I-N-C, **caractérisé en ce que** l'ajout de 10 % en poids, par rapport au mélange total, de 5-[6(octyloxy)-3-pyridinyl]-2-(octyloxy)pyrimidine inducteur smectique A conduit à une apparition d'un domaine de phases smA de moins de 5,5 °C et l'ajout de 20 % en poids, par rapport au mélange total, à une apparition d'un domaine de phases smA d'au moins 0,1 °C.

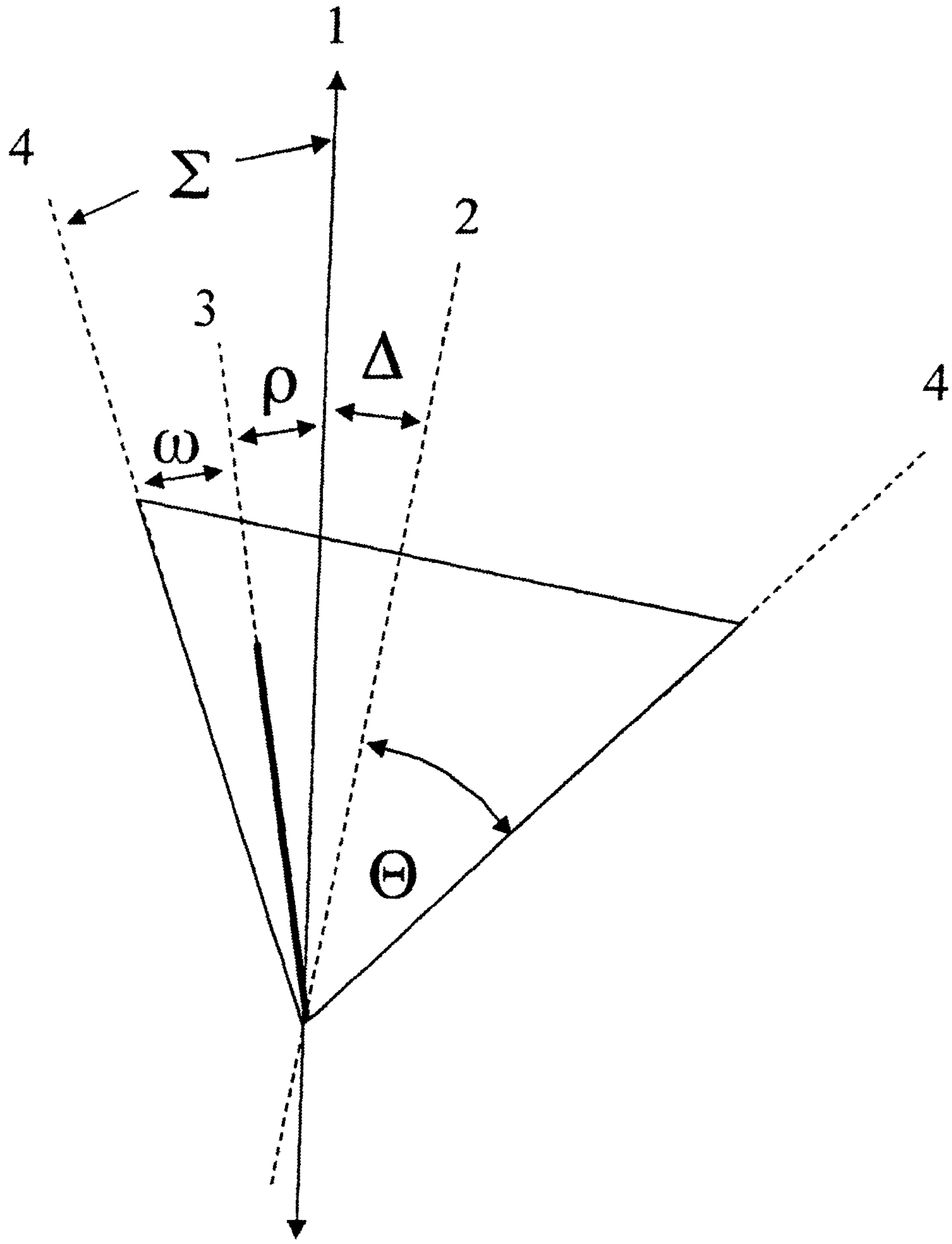


Fig. 1

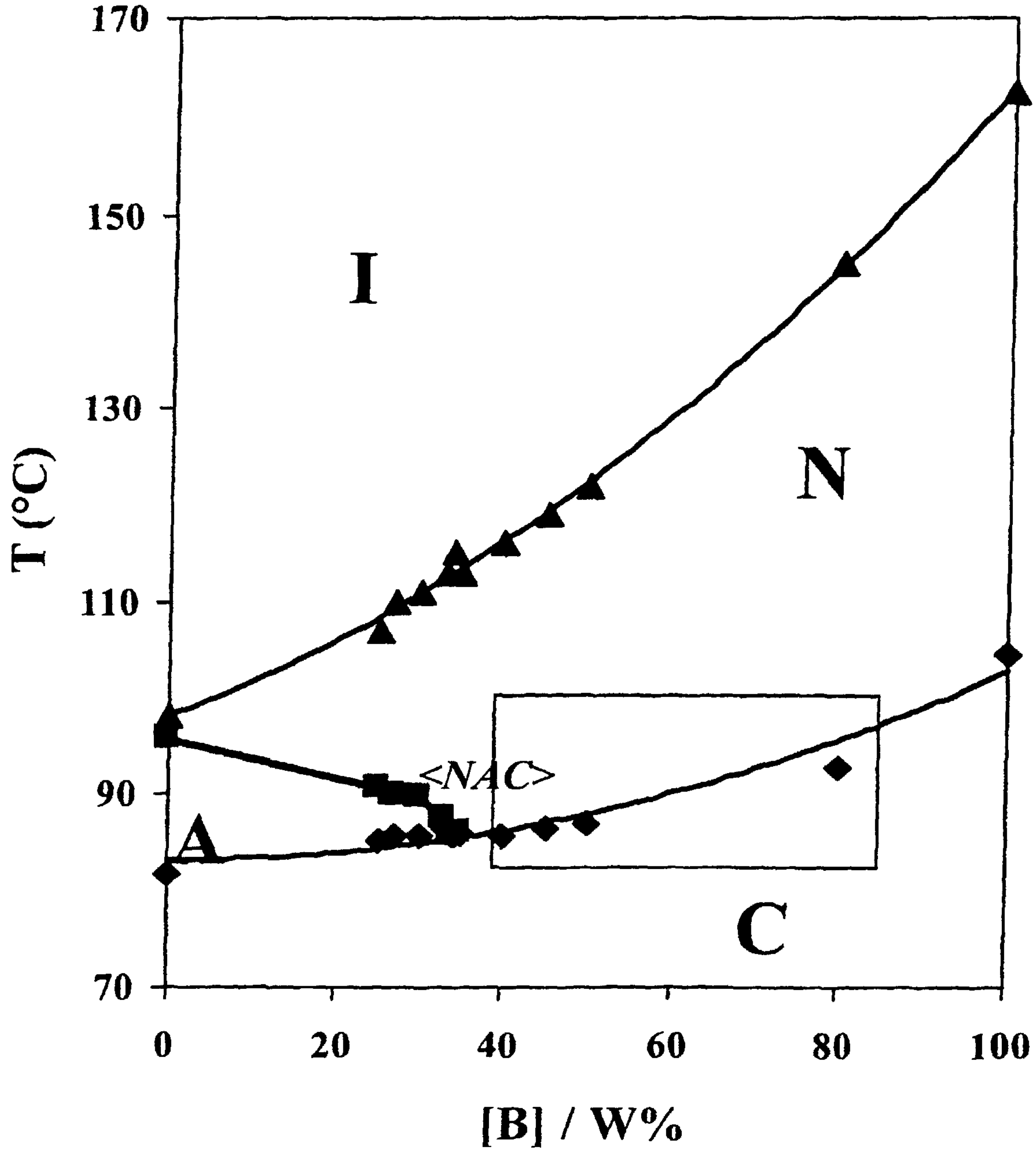


Fig. 2

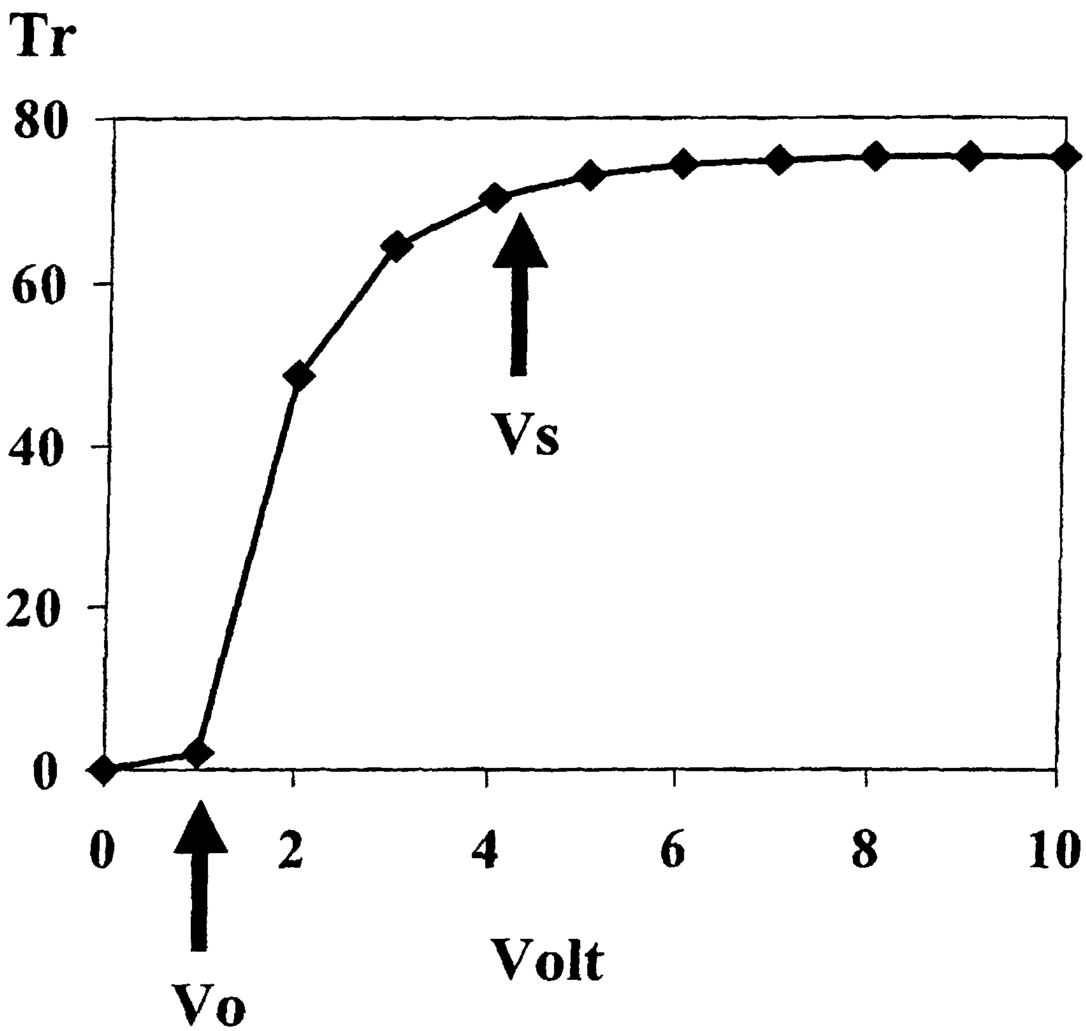


Fig. 3